Europäisches Patentamt

**European Patent Office**

Office européen des brevets

(11) Publication number: **0 208 450**
**A2**

# EUROPEAN PATENT APPLICATION

(21) Application number: **86304782.5**

(22) Date of filing: **20.06.86**

(51) Int. Cl.⁴: **C 12 H 1/06**

(30) Priority: **27.06.85 GB 8516239**

(43) Date of publication of application:
**14.01.87 Bulletin 87/3**

(84) Designated Contracting States:
**AT BE CH DE FR GB IT LI LU NL SE**

(71) Applicant: **APV INTERNATIONAL Limited**
**Manor Royal P.O. Box No. 4**
**Crawley West Sussex RH10 2QB(GB)**

(72) Inventor: **Shackleton, Ronald**
**The Shellin Beaconsfield Road**
**Chelwood Gate East Sussex RH17 7JU(GB)**

(74) Representative: **Smith, Geoffrey Leonard et al,**
**MARKS & CLERK Friars House 6 - 10 Parkway**
**Chelmsford Essex CM2 0NF(GB)**

(54) **Beer filtration.**

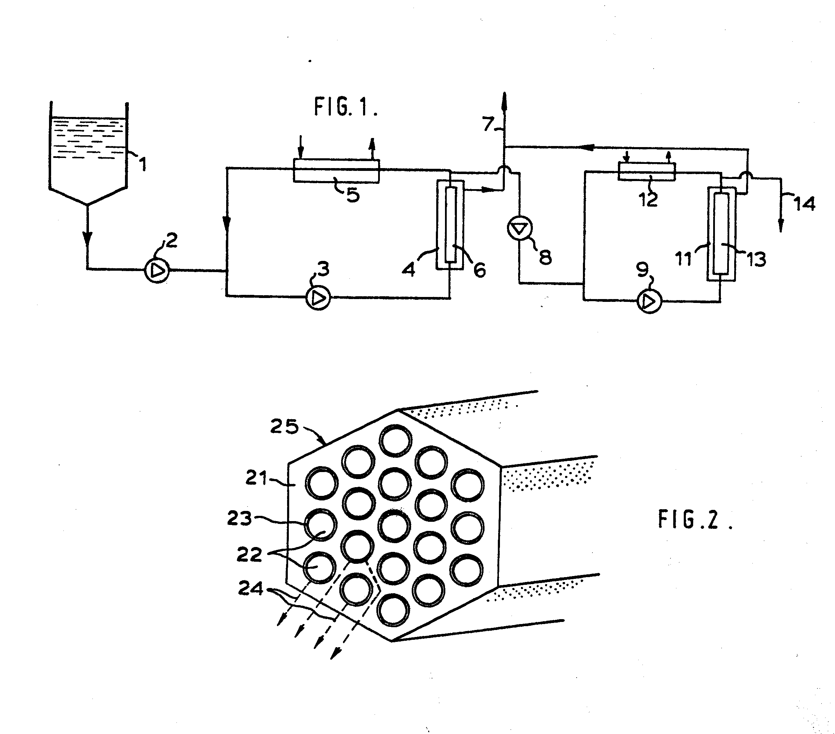

(57) It has been proposed to filter beer or tank bottoms using crossflow filtration. In accordance with the invention, this crossflow filtration is achieved using ceramic membranes. In a particular form shown in figure 1, a two stage filtration process combines the functions of clarification and recovery from tank bottoms. Beer is drawn from a tank 1 by a centrifugal pump 2 to a primary filtration stage comprising a circuit including a circulating centrifugal pump 3, a ceramic membrane filter 4 and a cooler 5. A proportion of the circulating liquid is drawn off by a positive pump 8, and passed to a secondary filtration stage, again comprising a circuit including a circulating positive pump 9, a ceramic membrane filter 11 and a cooler 12. A proportion of the retentate is drawn off via a line 14. This retentate is of a pasty consistency and normally has a commercial value, in that it is free of kieselguhr or other filter aid.

FIG. 1.

0208450

P10152GEN

## BEER FILTRATION

This invention relates to the filtration of beer.

Beer is normally filtered at a late stage in the production to clarify it and to remove particles, such as yeast cells, which may have been carried over from earlier production stages. Also, the liquid, known as tank bottoms, remaining in a vessel, such as a fermentation or maturation tank, after the usable beer has been pumped off, is essentially beer with a large, typically 5%, content of suspended solids. The solids content depends on the type of beer and the practice in the brewery concerned. The beer may be recovered in usable form after a filtration process. The filtration process normally entails either vacuum filtration or the use of a filter press. Vacuum filtration in particular tends to increase the dissolved oxygen content and decrease the dissolved $CO_2$ content, which may adversely affect the quality and shelf life of the beer, even if it is mixed back into the bulk of the beer emerging from a normal filtration process. In either of these two methods of beer recovery, a filter aid, usually kieselguhr, must be used.

In what follows, the term "beer" is intended to include, in addition to fermented beer with a normal solids content of typically 0.1%, tank bottoms and similar beer-based liquids with high suspended solids content, unless the context appears to require otherwise.

For these filtration processes for beer, it is conventional to use a filtration process involving a filter aid, such as kieselguhr. This material is used in large quantities in the brewing industry, but since it is potentially carcinogenic, difficult to handle, abrasive and also expensive, its elimination would be widely welcomed in the industry.

-2-

Under current UK practice, excise duty is paid on all the beer actually fermented, rather than on that actually leaving the brewery on a commercial basis, so beer lost with tank bottoms, on which duty has been paid, may represent a significant commercial loss.

As an alternative to the conventional filtration process for beer, proposals have been made to use a process of cross-flow membrane filtration. In cross-flow filtration, the beer is caused to flow across a membrane, so that a filter cake is not built up, but the solids content of the retentate is increased by passage of the permeate through the membrane. Such a process would be automatic in operation and would therefore require no labour. Also, the use of a filter aid is avoided, and effluent problems consequent upon its use are also eliminated. A high yield should in theory be obtained. The avoidance of build-up of a filter cake means that the flux rate is maintained for long periods. A disadvantage is that the retentate must remain sufficiently liquid to be pumpable, and so some beer is lost with the retentate drawn off from the system.

However, these processes have been based on the use of polymeric membranes mounted, as is usual, on a support formed of coarse filtering material. These processes are believed not to have been entirely successful. The filtration rate has been slow and not very reliable. Further, the polymeric membranes are difficult to clean satisfactorily and impossible to sterilize using a conventional steam sterilization process, which makes their acceptance by the brewery industry, even if otherwise satisfactory, problematical.

Ceramic membranes have been known for a considerable number of years, see for instance GB-A-1068332, which includes a reference to the use of porous ceramics for cross-flow filtration. Their use has been suggested in a number of processes operating on a comparatively small scale, but it has not hitherto been realised that their use in the filtration of beer in bulk would be practicable nor that such use might offer any commercial advantage.

It has now been discovered that ceramic membranes may be used satisfactorily for the filtration of beer by a cross-flow filtration method.

In accordance with a first aspect of the present invention, there is provided a method of filtering beer (as hereinbefore defined) by a cross-flow filtration process, in which the filtering medium is formed by one or more ceramic membranes.

In accordance with a second aspect of the present invention, there is provided apparatus for filtering beer (as hereinbefore defined) by a cross-flow filtration process, in which the filtering medium is formed by one or more ceramic membranes.

In accordance with a third aspect of the invention, there is provided plant for the manufacture of beer, including apparatus for filtering beer (as hereinbefore defined) by a cross-flow filtration process, in which the filtering medium is formed by one or more ceramic membranes.

The invention further comprehends beer when filtered by a method or in an apparatus in accordance with the invention as set forth above.

A ceramic membrane essentially comprises a layer of porous ceramic material with a pore diameter of the required size. For micro-filtration, this would be in a range from 0.1 to 10 microns, while smaller pore sizes would be appropriate for ultra-filtration or reverse osmosis. In the case of beer filtration, the pore size would normally be in the range for micro-filtration, probably between 0.2 and 5 microns, and would be chosen in dependence on the brewing process used.

The membrane is supported on a body of coarse pore ceramic material, e.g alumina with a pore size of 15 microns, and the body and membrane may be sintered together. In a preferred form of ceramic membrane, the support body may be an elongate element, and may have a plurality of parallel longitudinal channels each lined with a thin membrane layer of the fine-pore ceramic material. An end area of the element would have the body coated to seal it and would protrude into a header zone for parallel feed to the longitudinal channels. The retentate would emerge into a similar header at the discharge end, also sealed by a coating on the body, while permeate would pass through the body and into an outer casing from which it would be recovered. The outer casing would normally contain a plurality of such elements, so as to build up a commercially useful filtration area.

A ceramic membrane is robust, and technically it may constitute a micro-filter, so it gives a high throughput rate with effective filtration of beer. In addition to the advantages which are claimed for cross-flow filtration using polymeric membranes, the ceramic membrane may be cleaned by back-washing and/or the use of aggressive chemicals, such as acids, alkalis or detergents, and may be subsequently sterilized using steam.

The ceramic membranes may be chosen with a pore size in the micro-filter range, so that in cross-flow operation they prevent passage of unwanted yeast cells and micro-organisms, while retaining essential beer flavours in the permeate.

In particular, chill haze proteins, which are high molecular weight proteins that precipitate to cause cloudiness on chilling, eg to below 10°C, may be removed from beer if filtration is carried out below precipitation temperature, eg between 0°C and 10°C. At the same time, the lower molecular weight proteins, which inter alia assist in maintaining the head are retained in the permeate. The use of a ceramic membrane with a pore size in the micro-filter range is thus particularly useful in removing chill haze proteins when filtering in a chilled temperature range from 10°C down to about 0°C. This removal is achieved without significant loss of colour, head or bitterness, and without significant reduction in specific gravity.

In a particular mode of operation, which avoids the need for settling and subsequent separate filtration of tank bottoms, the whole content of a tank, or the product of a continuous process, may be fed to a primary filtration stage in which it is circulated past ceramic micro-filtration membranes. The permeate would constitute the bulk of the usable beer, while the retentate would have a high suspended solids content, for example between 4% and 8%, which is comparable with tank bottoms. A proportion of the flowing retentate would be passed on to a secondary filtration stage, also using ceramic micro-filtration membranes and a more positive mode of pumping appropriate to higher solids contents, to recover more beer and raise the solids content of the retentate to a much higher level, such as 25% or even 33%.

In either stage, the circuit for circulation past the membrane arrangement could include a cooler.

The invention will be further described with reference to the accompanying diagrammatic drawings, in which:

Figure 1 is a flow diagram showing one preferred mode of filtering beer to produce a clear product prior to packaging;

Figure 2 is a perspective sectional view showing part of a typical ceramic membrane element;

Figure 3 is a perspective view of a filter module incorporating one such element; and

Figure 4 is an enlarged view of one end of the module of figure 3, from a different angle.

In the process and apparatus shown in figure 1, beer is drawn from a tank 1, which may be a settling or maturation tank from a batch process, or it may be a buffer tank in a continuous brewing process, by a centrifugal pump 2 to a primary filtration stage comprising a circuit including a circulating positive or centrifugal pump 3, a filter 4 and a cooler 5. The filter includes one or more cross-flow filter modules based on ceramic membrane elements 6, the permeate through which is clarified beer which is drawn off on a line 7. The retentate is recirculated through the cooler 5.

A proportion of the circulating liquid, with its enhanced solids content, comparable with tank bottoms, is drawn off by a positive pump 8, and passed to a secondary filtration stage, again comprising a circuit including a circulating positive pump 9, a filter 11 and a cooler 12. The filter 11 again includes one or more cross-flow filter modules based on ceramic membrane elements 13. The permeate through this filter is clarified beer which is drawn off and passed on to the line 7. The retentate is recirculated through the cooler 12.

A proportion of the retentate is drawn off via a line 14. This retentate is of a pasty consistency and normally has an enhanced commercial value, in comparison with normal filter residues in a brewery, in that it is free of kieselguhr or other filter aid.

By way of example, it is envisaged that the total solids content (expressed as a percentage of oven-dried solids) of the beer in the tank 1 and entering the primary filtration stage may be 0.1%. In the circulating retentate transferred to the secondary filtration stage, this may have risen to somewhere in the region of 5 to 8%, and the retentate discharged from the secondary filtration circuit may have a total solids content of 25 to 33%. To achieve this, about 98% of the beer will be recovered as permeate from the primary filtration stage, and a further 1% from the secondary filtration stage.

Turning now to figures 2, 3 and 4, these show possible forms of ceramic membrane elements and modules incorporating them.

Figure 2 shows a commercially available form of ceramic membrane element 25, comprising a body 21 of porous alumina in the form of a rod of hexagonal section and having a pore size of typically 15 microns. Multiple passages 22 extend longitudinally through the body 21, and are lined with a thin layer 23 of fine-pore alumina, which constitutes the membrane. The pore size is chosen for the duty concerned, and for microfiltration is between 0.1 and 10 microns. For filtration of beer, a maximum pore size of 5 microns is typical. The feed beer is passed along the passages 22 and the clear permeate passes through the membrane-forming layers 23 and out through the coarsely porous body 21 as indicated by the arrows 24. The retentate continues along the passages 22.

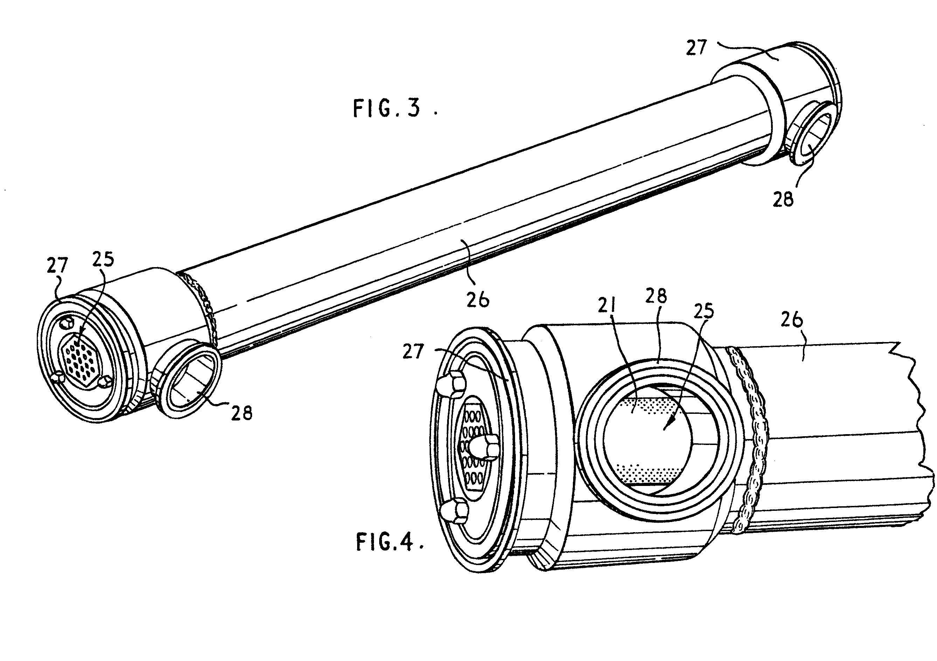

The figures 3 and 4 show a filter module having one element 25 mounted in a stainless steel outer casing 26 although, in most commercial applications, a plurality of elements, e.g. 3, 7, 9 or 19 elements, will normally be mounted in a single casing to form a module. The ends of the elements are coated with a sealing coating to prevent by-passing, and are mounted in end assemblies 27, to which headers (not shown) are to be attached. The feed and retentate are fed in and collected via the headers, and the permeate, which passes out through the body 21 of the element 25, is drawn off through unions 28. Two such unions 28 are provided to enable circulation of sterilizing steam and cleaning solutions and to enable cleaning the filter module by backwashing.

The filtration of comparatively clear beer will normally be carried out under conditions of chilling, eg to between 10°C and 0°C, whereas filtration of tank bottoms or retentate from a first filtration stage may be carried out at room temperatures, since the beer arising from such filtration will normally be added back to the bulk of the beer and will constitute only a small proportion of the whole, so that the chill haze protein content will be minimal and its removal will not merit the expense of special chilling.

Various other modifications may be made within the scope of the invention, as defined in the appended claims. In particular, the invention may be employed as a simple filtration system to clarify beer of initially low total solids content, normally using centrifugal pumping, or it may be employed, with positive pumping, to filter tank bottoms.

0208450

CLAIMS

1. A method of filtering beer (as hereinbefore defined) by a cross-flow filtration process, characterised in that the filtering medium is formed by one or more ceramic membranes (6,13,25).

2. A method according to claim 1, characterised in that beer is fed to a primary filtration stage (3,4,5) in which it is circulated past ceramic membranes (6) so that the permeate constitutes the bulk of the usable beer, and the retentate is passed on to a secondary filtration stage (9,11,12), also using ceramic membranes (13), to recover more beer.

3. A method according to claim 2, characterised in that the feed to the secondary filtration stage (9,11,12) has a high suspended solids content, for example 4%.

4. A method according to claim 2 or 3, characterised in that the beer is cooled during recirculation past the membranes (6,13) in either or both filtration stages.

5. A method according to any of claims 1 to 4, characterised in that the ceramic membrane (6,13,25) has pores of micro-filter size.

6. Apparatus for filtering beer (as hereinbefore defined) by a cross-flow filtration process, characterised in that the filtering medium is formed by one or more ceramic membranes (6,13,25).

7. Plant for the manufacture of beer, including apparatus for filtering beer (as hereinbefore defined) by a cross-flow filtration process, characterised in that the filtering medium is formed by one or more ceramic membranes (6,13,25).

-2-

8. Apparatus or plant according to claim 6 or 7, characterised by comprising a primary filtration stage (3,4,5) in which the beer is circulated past ceramic membranes (6) so that the permeate constitutes the bulk of the usable beer, and a secondary filtration stage (9,11,12), also using ceramic membranes (13), to recover more beer from the retentate.

9. Apparatus or plant according to claim 8, comprising a cooling means (5,12) to cool the beer during recirculation past the membrane (6,13) in either or both filtration stages.

10. Apparatus or plant according to any of claims 6 to 9, characterised in that the ceramic membrane (25) includes a support body (21) in the form of an elongate element having a plurality of parallel longitudinal channels (22) each lined with a membrane layer (23) of fine-pore ceramic.

11. Apparatus or plant according to any of claims 6 to 10, characterised in that the ceramic membranes (6,13,25) have a pore size to constitute a micro-filter.

FIG.1.

FIG.2.

FIG. 3.

FIG. 4.